# EUROPÄISCHE PATENTSCHRIFT

(11) **EP 0 439 660 B1**
(45) Veröffentlichungstag und Bekanntmachung des Hinweises auf die Patenterteilung: **23.11.1994**
(21) Anmeldenummer: 90102003.2
(22) Anmeldetag: 01.02.1990
(51) Int. Cl.: B23P 13/00, F01C 21/10, F04C 18/12

(54) **Zweiwellige Drehkolbenmaschine**
Twin-shaft rotary piston machine
Machine à pistons rotatifs avec deux arbres

(43) Veröffentlichungstag der Anmeldung: 07.08.1991
(73) Patentinhaber: AERZENER MASCHINENFABRIK GMBH, D-31849 Aerzen (DE)
(72) Erfinder: Gabriel, Gerhard, D-3258 Aerzen 1 (DE); Wildenhof, Peter, D-3258 Aerzen 1 (DE)
(74) Vertreter: Kohlmann, Karl Friedrich, Dipl.-Ing.

(56) Entgegenhaltungen:
- DE-A- 2 754 913
- FR-A- 2 577 454
- US-A- 2 519 588
- US-A- 4 598 816

## Beschreibung

Die Erfindung betrifft ein Verfahren zur Herstellung eines Gehäuses für eine zweiwellige Drehkolbenmaschine mit miteinander kämmenden Rotoren zur Verdichtung und Expansion von gasförmigen Medien, wobei die Rotoren in einem. Förderraum eines Gehäuses über Lager drehbar angeordnet sind, welcher von einem Zylindermantel sowie beidseitig angrenzenden Zylinderseitenteilen gebildet ist, wobei der Zylindermantel mit seinen beiden angrenzenden Zylinderseitenteilen in der Ebene der Rotorenachsen in zwei Hälften geteilt ist und die Zylinderseitenteile Aufnahmebohrungen für die Lager der Rotoren aufweisen. Darüberhinaus betrifft die Erfindung eine zweiwellige Drehkolbenmaschine mit miteinander kämmenden Rotoren zur Verdichtung und Expansion von gasförmigen Medien, wobei die Rotoren in einem Förderraum eines nach einem der erfindungsgemäßen Verfahren hergestellten Gehäuses über Lager drehbar angeordnet sind.

Für zweiwellige Drehkolbenmaschinen mit miteinander kämmenden Rotoren zur Verdichtung und Expansion von gasförmigen Medien existieren im Stand der Technik eine Vielzahl von verschiedenen Gehäuseausführungen.

So sind beispielsweise sogenannte Röhrenzylinder-Ausführungen bekannt, bei denen der Zylindermantel von einem einstückig ausgebildeten, rohrförmigen Mittelteil gebildet ist, welches an beiden Stirnseiten Flansche trägt, über die beidseitig Zylinderseitenteile an das Mittelteil angeflanscht sind. Eine solche Ausführung besitzt mindestens zwei vertikale Teilungsebenen zwischen den Lagern für die Rotoren.

Häufig sind bei derartigen Röhrenzylinder-Ausführungen die Zylinderseitenteile zusätzlich entweder in der Ebene der Rotorenachsen oder parallel zu den vertikalen Teilungsebenen unterteilt, so daß sich in einem solchen Fall zwei weitere Teilungsebenen ergeben.

Bei mittleren oder großen Drehkolbenmaschinen dieser Art kann zudem das rohrförmige Mittelteil zusätzlich in der Ebene der Rotorenachsen unterteilt sein, wodurch sich insgesamt fünf Teilungsebenen ergeben.

Ähnlich verhält sich die Situation bei sogenannten Topfzylinder-Ausführungen. Bei diesen Ausführungen sind der Zylindermantel und ein Zylinderseitenteil einstückig ausgebildet, wobei häufig dieses Zylinderseitenteil zusätzlich in einer vertikalen Ebene unterteilt ist. Die "offene" Stirnseite einer derartigen Topfzylinder-Ausführung ist mit einem weiteren Zylinderseitenteil verschlossen, das seinerseits parallel zur vertikalen Anschlußebene oder gegebenenfalls auch in der Ebene der Rotorenachsen unterteilt sein kann, wodurch sich eine weitere Teilungsebene ergibt. Bei mittleren oder großen Drehkolbenmaschinen kann ferner der aus dem Zylindermantel und einem Zylinderseitenteil bestehende Gehäuseteil in der Ebene der Rotorenachsen unterteilt sein, wodurch sich je nach Unterteilung der Zylinderseitenteile drei bis fünf Teilungsebenen ergeben können.

Zusammenfassend ist festzustellen, daß Gehäuseausführungen für zweiwellige Drehkolbenmaschinen der bekannten Art zwischen den Lagern für die Rotoren stets zumindest eine, meist aber zwei oder mehrere vertikale Teilungsebenen aufweisen und darüber hinaus zusätzliche horizontale Teilungsebenen aufweisen können.

Teilungsebenen werden in erster Linie zur Vereinfachung der Bearbeitungsvorgänge an den Innenflächen des Gehäuses, insbesondere im Bereich der Lager- und Dichtungsanordnungen vorgesehen. Sie vereinfachen ferner die Montage, die Inspektion und die Reparatur. Bei großen Drehkolbenmaschinen spielt auch die Unterteilung in gewichtsmäßig gut handhabbare Gehäuseteile eine Rolle.

Zwar sind auf dem Gebiet der einwelligen Turbomaschinen, bei bestimmten Getriebeausführungen oder auch anderen Maschinen Gehäusekonstruktionen bekannt, die nur eine horizontal in der Wellenebene liegende Teilungsebene aufweisen, d.h. ohne eine zwischen den Wellenlagern liegende Teilungsebene auskommen. Bei derartigen bekannten Gehäusekonstruktionen kommt es jedoch im Gegensatz zu zweiwelligen Drehkolbenmaschinen der gattungsgemäßen Art nicht auf die Einhaltung des bei zweiwelligen Drehkolbenmaschinen äußerst kritischen Spieles zwischen den Stirnflächen der Rotoren und den Stirnflächen der Zylinderseitenteile an, so daß in Wellenachsrichtung größere Toleranzen in Kauf genommen werden können.

Die Anordnung der Teilungsebenen richtet sich grundsätzlich nach den klassischen Konstruktionsregeln, die u. a. die Vorgabe beinhalten, nach Möglichkeit komplizierte Bearbeitungsvorgänge an schwer zugänglichen Stellen zu vermeiden. Im klassischen Maschinenbau kommt der Vermeidung komplizierter Bearbeitungsvorgänge traditionell eine große Bedeutung zu, die häufig zu einer Übergewichtung dieses Grundsatzes zuungunsten anderer wichtiger Aspekte, wie beispielsweise den Einstell- und Justierarbeiten bei der Montage führt. Der bisher übliche vielteilige Gehäuseaufbau bedingt durch die lange Aneinanderreihung der Toleranzen der einzelnen Teile Abweichungen in der Fluchtung und der Achsparallelität der vier Lagerbohrungen und damit der Rotoren zueinander und gegenüber der Zylinderinnenwandung und gegenüber den Seitenteilen. Um trotz dieser zwangsläufigen Abweichungen berührungsfreien Lauf und einwandfreies Abwälzen der Rotoren zu erreichen, müssen entsprechend große Spiele vorgesehen werden, die den Wirkungsgrad verschlechtern.

Aufgabe der vorliegenden Erfindung ist es, besonders vorteilhafte Verfahrenweisen zur Herstellung von Gehäusen für zweiwellige Drehkolbenmaschinen zu schaffen.

Diese Aufgabe wird bei einem ersten Verfahren dadurch gelöst,
- daß die beiden jeweils einstückig ausgebildeten Gehäusehälften im Bereich der Teilungsebene fertigbearbeitet, zusammengefügt und mit Paßmitteln versehen werden,
- daß die Gehäusehälften jeweils für sich auf Vorrichtungsteile einer Vorrichtung aufgespannt und über diese zur Bildung eines Zwischenraumes für das Einfahren und Verfahren des bzw. der Bearbeitungswerkzeuge(s) für die Bearbeitung senkrecht zur Teilungsebene auseinanderfahrbar sind,
- und daß zumindest die Endbearbeitung mit eingefahrenem Bearbeitungswerkzeug bei zusammengespannten Gehäusehälften erfolgt.

Eine vorteilhafte zweite Verfahrensweise zur Lösung der gestellten Aufgabe kennzeichnet sich dadurch,
- daß die beiden jeweils einstückig ausgebildeten Gehäusehälften getrennt voneinander auf Vorrichtungsteile einer Vorrichtung aufgespannt werden,
- und daß die Innenflächen des Zylindermantels, der beiden einstückig mit diesem verbundenen Zylinderseitenteile und der Aufnahmebohrungen für die Lager mit einem oder mehreren Werkzeugen bearbeitet werden, welche um eine zur Teilungsebene parallele Achse rotieren und um eine senkrecht zur Teilungsebene verlaufende Achse verschwenkbar und über diese Achse antreibbar sind.

Eine dritte Verfahrensweise zur Lösung der gestellten Aufgabe besteht darin,
- daß die beiden jeweils einstückig ausgebildeten Gehäusehälften getrennt voneinander auf Vorrichtungsteile einer Vorrichtung aufgespannt werden,
- und daß die Innenflächen des Zylindermantels, der beiden einstückig mit diesem verbundenen Zylinderseitenteile und der Aufnahmebohrungen für die Lager vorbearbeitet und im Anschluß daran durch Funkenerosion über Funkenerosionsmatrizen fertigbearbeitet werden.

Zweiwellige Drehkolbenmaschinen der erfindungsgemäßen Art können grundsätzlich mit herkömmlichen Abschlußdeckeln auf den Zylinderseitenteilen ausgestattet sein. Im Falle der Herstellung der Gehäuse durch das zweite und dritte Herstellungsverfahren ist es jedoch auch möglich, die Abschlußdeckel einstückig mit den Zylinderseitenteilen auszubilden.

Darüber hinaus ist es vorteilhaft, die Gehäusehälften mit Aufnahmeeinrichtungen zum verfahrbaren Aufspannen auszustatten.

Aufgabe der vorliegenden Erfindung ist es ferner, ein vollkommen neuartiges Konstruktionskonzept für eine zweiwellige Drehkolbenmaschine der eingangs genannten Art zu schaffen, bei dem Einstell- und Justierarbeiten bei der Montage möglichst weitgehend oder sogar vollständig vermieden werden. Ferner soll die Fluchtung und Achsparallelität der vier Lagerbohrungen absolut sichergestellt werden, so daß kleinere Spiele und höhere Wirkungsgrade erreicht werden können.

Diese Aufgabe wird erfindungsgemäß dadurch gelöst, daß jede Hälfte des Zylindermantels mit seinen beiden angrenzenden Zylinderseitenteilen einstückig als Gehäusehälfte ausgebildet ist und beide Gehäusehälften mit gemeinsamen Paßmitteln zur paßgenauen Ausrichtung zueinander ausgestattet sind.

Aufgrund der erfindungsgemäßen Merkmale besitzt das Gehäuse keine zwischen den Lagern angeordnete Teilungsebene, sondern ausschließlich eine einzige, in der Ebene der Rotoren liegende Teilungsebene. Aufgrund dieses Konzeptes liegen die Aufnahmebohrungen für die Lager in einem und demselben einstückigen Gehäuseteil, so daß die mit modernen Bearbeitungsmaschinen erzielbare genaue Fluchtung und Ausrichtung der vier Aufnahmebohrungen für die Lager und damit auch für die Rotoren bei der Montage oder im Falle einer Reparatur präzise erhalten bleibt. Aufwendige Justier- und Einstellarbeiten, wie sie insbesondere bei trocken arbeitenden, zweiwelligen Drehkolbenmaschinen mit engen Spielen äußerst wichtig sind, werden dadurch überflüssig.

Aufgrund der Einstückigkeit haben die Gehäusehälften darüber hinaus eine hohe Stabilität. Mangels Teilungsebenen ergeben sich ferner keine Dichtungs- und Toleranzprobleme, wie sie durch die Addition von Fertigungstoleranzen auftreten können. Dadurch können kleinere Spiele und damit höhere Wirkungsgrade erzielt werden.

Durch das neuartige Konstruktionskonzept werden somit die insbesondere bei zweiwelligen Drehkolbenmaschinen erforderlichen Genauigkeiten vollständig in den Bereich der maschinellen Fertigung verlegt und individuelle, von menschlichen Einflüssen abhängige Justier- und Einstellarbeiten bei der Montage eliminiert. Dies gilt nicht nur in radialen (vertikalen) Richtungen (beliebig senkrecht zu den Rotorenachsen), sondern auch in axialer (horizontaler) Richtung der Rotoren, da die Taschen für die Aufnahme der Axiallager in ihrer Breite und in ihrer Entfernung von den Seitenflächen des Zylinders in den einstückigen Gehäusehälften genauestens eingehalten werden können. Dadurch wird eine gleichbleibend hohe Qualität auch bei Serienherstellung sichergestellt und der Montageaufwand auf Arbeiten reduziert, die mangels individueller Justierungen oder Einstellungen auch von Handhabungsgeräten durchgeführt werden können.

Gemäß einer vorteilhaften Weiterbildung des erfindungsgemäßen Konstruktionskonzeptes können auch die Rotoren jeweils einschließlich Welle, Sychronisierungszahnrad (bei trockener Bauart) und rotorseitigen Teilen der Dichtungsanordnung einstückig hergestellt werden. Dadurch entfällt die aufwendige Einstellung der Synchronisierungszahnräder zu der Rotorverzahnung. Zwar muß bei einer derartigen einstückigen Rotorkonstruktion bei der Herstellung ein gewisser Mehraufwand betrieben werden, da die Verzahnungen von Rotor und Synchronisierungszahnrad in tangentialer Richtung genau zueinander positioniert erfolgen müssen. Zur Vermeidung von Fertigungstoleranzen können die Verzahnungen auf einer Maschine in einer Aufspannung vorgenommen werden. Das Vermeiden von aufwendigen Einstell- und Justierarbeiten, die zudem bei dem mehrteiligen Rotorenaufbau der herkömmlichen Maschinen (des Standes der Technik) immer einem individuellen Montageeinfluß unterliegen, überwiegt jedoch diesen Mehraufwand beträchtlich und erbringt zudem erhebliche Vorteile auch hinsichtlich der radialen Fluchtungsgenauigkeit, da die Exzentrizitäten zwischen der Verzahnung der Rotoren und der Verzahnung der Synchronisierungszahnräder minimiert werden können. Dies erlaubt wiederum kleinere Verdrehflankenspiele und wirkt sich positiv auf die Geräuschentwicklung der Maschine beim Betrieb aus.

Aufgrund der einstückigen Ausbildung entfällt die Nabenbohrung an den Synchronisierungszahnrädern und der zugeordnete Sitz auf der Rotorwelle. Dies reduziert die Herstellungskosten und führt - wie oben bereits beschrieben - zur Eliminierung der aufwendigen Montage- und Einstellarbeiten.

Von Vorteil ist ferner, daß im Falle einer einstückigen Rotorausbildung die Zahnräder schmaler ausgeführt werden können. Bekanntlich ist bei Drehkolbenmaschinen der kritische Punkt nicht die Verzahnungsbreite, sondern die Nabenlänge der Synchronisierungszahnräder, da deren unverrückbare zentrische und taumelfreie Befestigung auf der Rotorwelle ausschlaggebend ist.

Entsprechendes gilt auch für die rotorseitigen Teile der Dichtungsanordnung. Diese müssen bei dem erfindungsgemäßen Konstruktionskonzept im Gegensatz zu den bekannten Konstruktionen nicht mehr separat hergestellt und einzeln auf der Welle montiert werden.

Dies gilt auch für die gehäuseseitigen Teile der Dichtungsanordnung, die gemäß einer vorteilhaften Weiterbildung der Erfindung einstückig mit den Gehäusehälften ausgebildet sind. Dadurch werden die bei bekannten Konstruktionen unvermeidlichen Exzentrizitäten, ein beträchtlicher Teil des Herstellungsaufwandes, sowie der Montage- und Einstellaufwand vermieden. Zudem führt die einstückige Ausbildung aufgrund der Verlagerung auf die Herstellungsseite zu einer höheren und insbesondere gleichbleibenden Qualität, was letztlich eine kostenreduzierende Auswirkung hat.

Im folgenden sind zur weiteren Erläuterung und zum besseren Verständnis der Erfindung ein Ausführungsbeispiel einer erfindungsgemäßen zweiwelligen Drehkolbenmaschine sowie zwei erfindungsgemäße Verfahrensweisen zur Herstellung eines Gehäuses für eine derartige zweiwellige Drehkolbenmaschine unter Bezugnahme auf die beigefügten Zeichungen näher beschrieben und erläutert.
Figur 1 zeigt in einer sogenannten Explosionsdarstellung perspektivisch die beiden Gehäusehälften, die beiden miteinander kämmenden Rotoren sowie die Lager eines Ausführungsbeispieles einer zweiwelligen Drehkolbenmaschine,
Figur 2 zeigt schematisch zur Erläuterung des ersten Verfahrens eine Vorrichtung in geöffnetem Zustand, in die die beiden Gehäusehälften eingespannt sind,
Figur 3 zeigt die Vorrichtung gemäß Figur 2 in geschlossenem Zustand,
Figur 4 zeigt in einer Ansicht auf die Trennungsebene eine Gehäusehälfte mit erläuternden Angaben zum ersten Verfahren,
Figur 5 zeigt schematisch zur Erläuterung des zweiten Verfahrens eine in einer Vorrichtung eingespannte Gehäusehälfte einschließlich Bearbeitungswerkzeug,

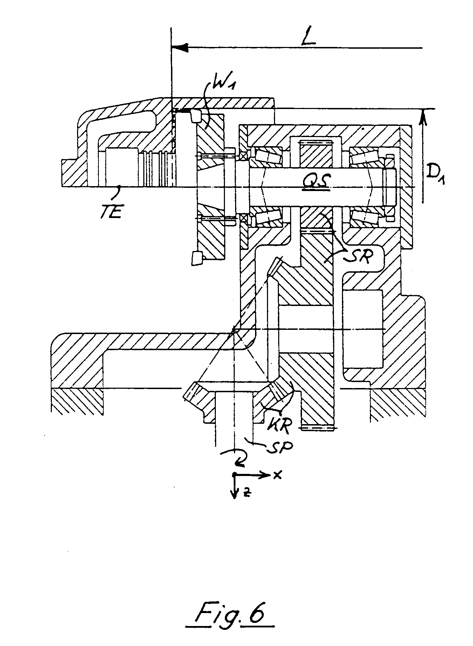

Figur 6 zeigt schematisch das in Figur 5 dargestellte Bearbeitungswerkzeug in einer gegenüber Figur 5 um 90° gedrehten Stellung zusammen mit einem Teil der zu bearbeitenden Gehäusehälfte.

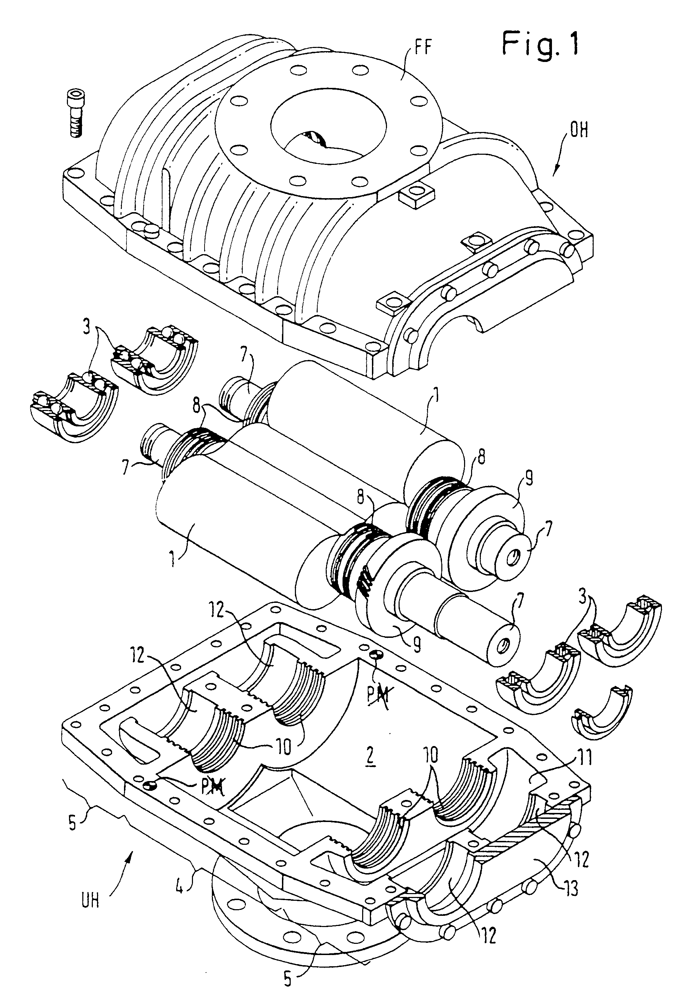

Die in Figur 1 dargestellte zweiwellige Drehkolbenmaschine besitzt zwei miteinander kämmende Rotoren 1, welche im vorliegenden Ausführungsbeispiel zweiflügelig ausgebildet sind. Die Rotoren 1 sind in einem Förderraum 2 eines Gehäuses über Lager 3 drehbar angeordnet.

Das Gehäuse ist in der Ebene der Rotorachsen in zwei Hälften, nämlich eine obere Hälfte OH und eine untere Hälfte UH geteilt.

Der Förderraum 2 des Gehäuses wird von den Innenflächen eines Zylindermantels sowie beidseitig angrenzenden Zylinderseitenteilen gebildet. Aufgrund der Unterteilung des Gehäuses in eine obere Gehäusehälfte OH und eine untere Gehäusehälfte UH werden an beiden Gehäusehälften jeweils Zylindermantelhälften 4 und Zylinderseitenteilhälften 5 gebildet. Jede Zylindermantelhälfte 4 ist dabei mit seinen beiden angrenzenden Zylinderseitenteilhälften 5 einstückig ausgebildet.

Sowohl die obere Gehäusehälfte OH als auch die untere Gehäusehälfte UH weisen aufeinander abgestimmte gemeinsame Paßmittel PM auf, die in Figur 1 lediglich schematisch dargestellt sind.

Im vorliegenden Ausführungsbeispiel sind die Rotoren 1 zusammen mit den Wellen 7 sowie den rotorseitigen Teilen 8 einer Dichtungsanordnung und den jeweils zugeordneten Synchronisierungsrädern 9 einstückig ausgebildet.

Gehäuseseitig schließen an den Förderraum 2 Teile 10 der Dichtungsanordnung, Aufnahmetaschen 11 für die Synchronisierungszahnräder 9 sowie Aufnahmebohrungen 12 für die Lager 3 an. Die gehäuseseitigen Teile 10 der Dichtungsanordnung sowie die Aufnahmetaschen 11 für die Synchronisierungszahnräder 9 als auch die Aufnahmebohrungen 12 für die Lager 3 sind einstückig in die Zylinderseitenteilhälften 5 des Gehäuses eingearbeitet.

Das in Figur 1 dargestellte Gehäuse besitzt lediglich auf der Antriebsseite einen separaten Abschlußdeckel 13. Der gegenüberliegende Abschlußdeckel ist in diesem Ausführungsbeispiel einstückig mit der zugeordneten Zylinderseitenteilhälfte 5 ausgebildet.

Sowohl die obere Gehäusehälfte OH als auch die untere Gehäusehälfte UH besitzt auf der Außenseite einen Flansch zum Anschluß an den Saug- bzw. Druckstutzen (nicht dargestellt). Diese Flansche sind auf ihrer Oberseite mit einer bearbeiteten Fläche, der sogenannten Flanschfläche ausgestattet.

Die untere Gehäusehälfte UH besitzt ferner Füße, die zur besseren Übersichtlichkeit in Figur 1 nicht dargestellt sind. Diese Füße besitzen sogenannte Fußflächen, welche zusammen mit den Flanschflächen zum Aufspannen auf eine Vorrichtung für den Bearbeitungsvorgang dienen, wie dies im folgenden noch beschrieben werden wird.

Vor der eigentlichen Innenbearbeitung der Gehäusehälften werden zunächst die Fuß- und Flanschflächen FF und die Fläche der Teilungsebene TE bearbeitet. Darüber hinaus werden Paßbohrungen für die Paßmittel PM und gegebenenfalls auch die übrigen Bohrungen an den Flanschen, Füßen und der Teilungsebene angebracht.

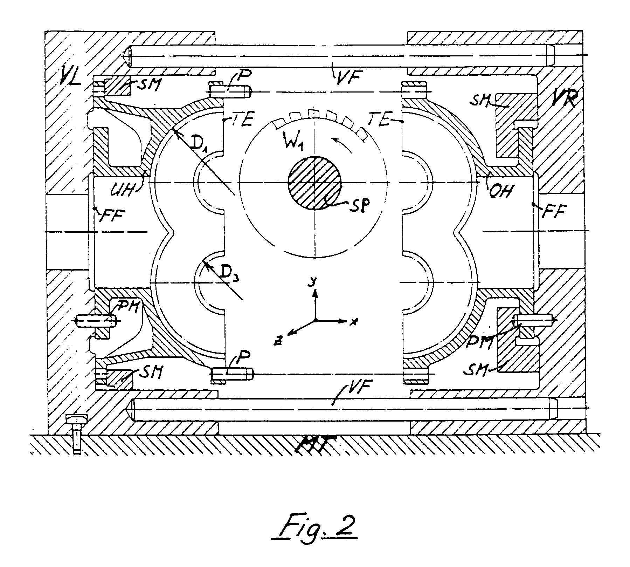

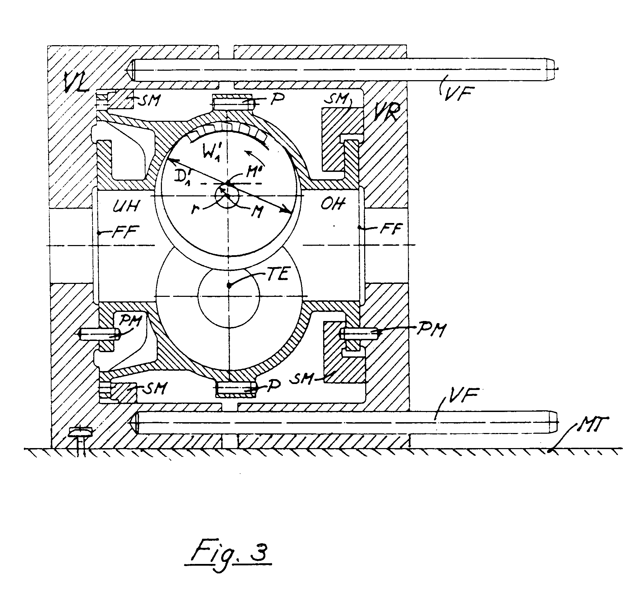

Die in dieser Weise vorbearbeiteten Gehäusehälften werden dann in eine Vorrichtung eingespannt, wie sie in den Figuren 2 und 3 dargestellt ist. Diese Vorrichtung besteht aus einem linken Vorrichtungsteil VL und einem rechten Vorrichtungsteil VR. Die untere Gehäusehälfte UH wird dann im linken Vorrichtungsteil VL mit Spannmitteln SM und Paßmitteln PM befestigt. In gleicher Weise wird die obere Gehäusehälfte OH im rechten Vorrichtungsteil VR über Spannmittel SM und Paßmittel PM befestigt. Der linke Vorrichtungsteil VL kann beispielsweise fest auf einem Maschinentisch MT aufgebaut sein, während der rechte Vorrichtungsteil VR beispielsweise über eine hydraulische Anordnung auf Führungen VF und MT senkrecht zur Teilungsebene TE verfahrbar ist.

Der rechte Vorrichtungsteil VR wird dann zusammen mit der oberen Gehäusehälfte OH soweit vom linken Vorrichtungsteil VL und damit von der unteren Gehäusehälfte UH abgerückt, bis ein umlaufendes Werkzeug W1 für die Zylinderbohrungen D1 des Förderraumes 2 problemlos eingefahren werden kann. Die Vorgänge für die Innenbearbeitung können dann in dem in Figur 2 dargestellten Zustand, d.h. bei geöffneter Vorrichtung durchgeführt werden. Dies hat den Vorteil, daß die beim Bearbeitungsvorgang anfallenden Späne gut abfließen können. Eine Bearbeitung der Gehäusehälften in geöffnetem Zustand der Vorrichtung hat allerdings den Nachteil, daß jede Gehäusehälfte für sich bearbeitet werden muß.

Sofern für eine ausreichende Späneabfuhr gesorgt wird, können die Bearbeitungsvorgänge auch im geschlossenen Zustand der beiden Vorrichtungsteile durchgeführt werden.

Um die erforderliche Genauigkeit zu erhalten, wird die Fertigbearbeitung vorteilhafterweise in jedem Fall im geschlossenen Zustand der Vorrichtung, d.h. im zusammengefahrenen Zustand der unteren und der oberen Gehäusehälfte durchgeführt. Beide Gehäusehälften werden dabei gemeinsam bearbeitet. Zur Durchführung des für die Bearbeitung notwendigen Verfahrens der Werkzeuge, so beispielsweise von der oberen Gehäusebohrung des Förderraumes 2 zu der unteren Gehäusebohrung sowie für das Wechseln der Werkzeuge für die verschiedenen Bearbeitungsdurchmesser, wird der rechte Vorrichtungsteil VR stets von dem linken Vorrichtungsteil VL (in x-Richtung) abgerückt. Bei der Bearbeitung der jeweils kleinsten vorkommenden Durchmesser ist natürlich auch ein axiales Ein- und Ausfahren der Werkzeugspindel SP bei geschlossener Vorrichtung möglich.

Beim Bearbeiten der Innenflächen bei geschlossener Vorrichtung ist es zweckmäßig, den Schließvorgang kurz vor dem Auflegen des Gehäuseoberteiles OH auf das Gehäuseunterteil UH derart verzögert ablaufen zu lassen, daß das Werkzeug W1 problemlos beidseitig anschneiden kann.

Vorteilhafter ist mitunter der Einsatz eines Werkzeuges W1' mit einem um 2 r verkleinerten Durchmesser gegenüber dem Werkzeug W1. Bei einer derartigen Anordnung zirkuliert das Werkzeug W1' mit einem Radius r um den Mittelpunkt M (vergl. Figur 3).

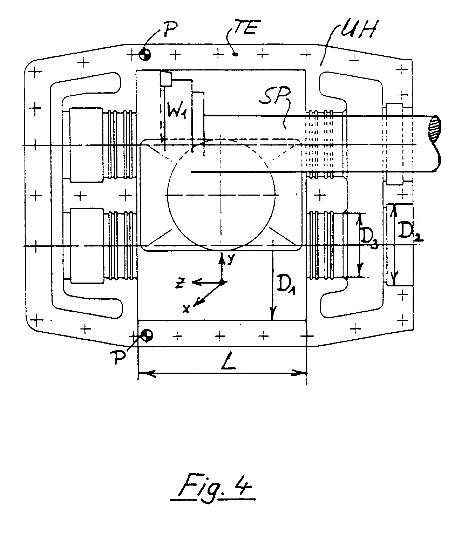

Wie in Figur 4 schematisch dargestellt, verläuft die Spindel SP des Werkzeuges W1 durch die Bohrung D3 für die Dichtungsanordnung und weiter durch die Bohrung D2 für die Lager 3 nach außen. Der Durchmesser der Spindel SP muß stets kleiner sein als der Durchmesser der Bohrung D3.

Die geschilderte erste Verfahrensweise eignet sich am besten für relativ kurze Drehkolbenmaschinen mit einem kleinen Verhältnis L / D1. Im Bedarfsfall ist es jedoch auch möglich, auf den Vorteil eines einstückig mit dem Zylinderseitenteil verbundenen Abschlußdeckels zu verzichten. Auf diese Weise kann eine verlängerte Spindel SP für das Werkzeug eingesetzt werden, welche zur Verringerung der Durchbiegung in einem Fanglager (nicht dargestellt) aufgenommen werden kann. Es ist auch möglich, auf den Vorteil der einstückig mit den Gehäusehälften verbundenen Dichtungsanordnungen 10 zu verzichten und durch eingesetzte Dichtungsbuchsen den kleinsten Durchmesser D3 zu vergrößern. Die Dichtungsbuchsen müssen in einem solchen Fall jedoch zumindest auf der zu den Zahnrädern 9 benachbarten Seite geteilt sein.

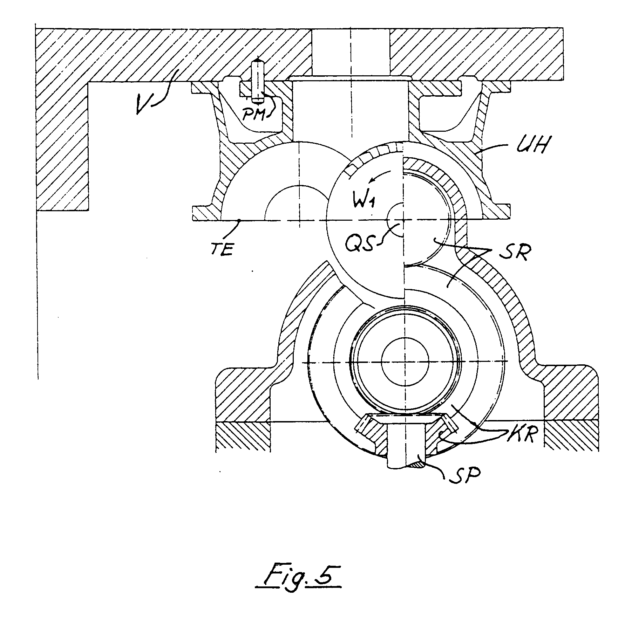

Bei der zweiten Verfahrensweise wird die obere Gehäusehälfte OH und die untere Gehäusehälfte UH ebenfalls auf eine Vorrichtung V (vergl. Figur 5) über Spannmittel SM und Paßmittel PM aufgespannt. Von der Spindel SP wird das Werkzeug W1 eines Bearbeitungskopfes angetrieben. Der Antrieb erfolgt über Kegelräder KR und Stirnräder SR auf eine Querspindel QS, auf die verschiedene Bearbeitungswerkzeuge W1 (beispielsweise für die Durchmesser D1, D2, D3 oder dergleichen) aufgesetzt werden können.

Der Bearbeitungsvorgang mit dem Werkzeug W1 erfolgt nun in der Weise, daß das Werkzeug W1 etwa in der Mitte der die Länge L aufweisenden Zylinderbohrung D1 angesetzt und in einem ersten Schritt in negativer x-Richtung bis zur Stirnfläche des einstückig anschließenden Zylinderseitenteiles verfahren wird. Danach wird das Werkzeug W1 ausgefahren, um die z-Achse um 180° geschwenkt, und die gegenüberliegende Hälfte der Zylinderlänge L analog bearbeitet. In ähnlicher Weise werden die Bohrungen D2, D3, usw. für die Lager und für die Dichtungsanordnungen bearbeitet.

Die geschilderte zweite Verfahrensweise eignet sich insbesondere für relativ lange Förderraumlängen mit einem großen Verhältnis L / D1. Die Zylinderraumlänge L muß dabei allerdings mindestens doppelt so groß sein wie die axiale Erstreckung der Querspindel QS einschließlich des Werkzeuges W1.

Für besondere Anwendungsfälle können auch Kombinationen aus der ersten und der zweiten Verfahrensweise zur Bearbeitung der Gehäusehälften eingesetzt werden. So kann es beispielsweise zweckmäßig sein, die Vorbearbeitung entsprechend der zweiten Verfahrensweise und die Fertigbearbeitung entsprechend der ersten Verfahrensweise oder der mit Funkenerosion arbeitenden dritten Verfahrensweise vorzunehmen.

Bei der dritten Verfahrensweise werden in an sich bekannter Weise Negativabformungen der Innenkonturen der oberen und der unteren Gehäusehälfte hergestellt, welche praktisch gleich sind. Diese Negativabformungen dienen als Funkenerosions-Matrizen, mit denen die Fertigbearbeitung vorgenommen werden kann. Es kann sich dabei um ein- oder mehrteilige Matrizen handeln. Der Verfahrensablauf kann gegebenenfalls in einem oder mehreren Schritten erfolgen.

## Patentansprüche

1. Verfahren zur Herstellung eines Gehäuses für eine zweiwellige Drehkolbenmaschine mit miteinander kämmenden Rotoren (1) zur Verdichtung und Expansion von gasförmigen Medien, wobei die Rotoren (1) in einem Förderraum (2) eines Gehäuses über Lager (3) drehbar angeordnet sind, welcher von einem Zylindermantel sowie beidseitig angrenzenden Zylinderseitenteilen gebildet ist, wobei der Zylindermantel mit seinen beiden angrenzenden Zylinderseitenteilen in der Ebene der Rotorenachsen in zwei Hälften geteilt ist und die Zylinderseitenteile Aufnahmebohrungen (12) für die Lager (3) der Rotoren (1) aufweisen,
dadurch **gekennzeichnet,**
- daß die beiden jeweils einstückig ausgebildeten Gehäusehälften (OH, UH) im Bereich der Teilungsebene fertigbearbeitet, zusammengefügt und mit Paßmitteln (P) versehen werden,
- daß die Gehäusehälften (OH, UH) jeweils für sich auf Vorrichtungsteile (VL, VR) einer Vorrichtung (V) aufgespannt und über diese zur Bildung eines Zwischenraumes für das Einfahren und Verfahren des bzw. der Bearbeitungswerkzeuge(s) (W1) für die Bearbeitung senkrecht zur Teilungsebene auseinanderfahrbar sind,
- und daß zumindest die Endbearbeitung mit eingefahrenem Bearbeitungswerkzeug bei zusammengespannten Gehäusehälften (OH, UH) erfolgt.

2. Verfahren zur Herstellung eines Gehäuses für eine zweiwelle Drehkolbenmaschine mit miteinander kämmenden Rotoren (1) zur Verdichtung und Expansion von gasförmigen Medien, wobei die Rotoren (1) in einem Förderraum (2) eines Gehäuses über Lager (3) drehbar angeordnet sind, welcher von einem Zylindermantel sowie beidseitig angrenzenden Zylinderseitenteilen gebildet ist, wobei der Zylindermantel mit seinen beiden angrenzenden Zylinderseitenteilen in der Ebene der Rotorenachsen in zwei Hälften geteilt ist und die Zylinderseitenteile Aufnahmebohrungen (12) für die Lager (3) der Rotoren (1) aufweisen,
dadurch **gekennzeichnet,**
- daß die beiden jeweils einstückig ausgebildeten Gehäusehälften (OH, UH) getrennt voneinander auf Vorrichtungsteile (VL, VR) einer Vorrichtung (V) aufgespannt werden,
- und daß die Innenflächen des Zylindermantels, der beiden einstückig mit diesem verbundenen Zylinderseitenteile und der Aufnahmebohrungen (12) für die Lager (3) mit einem oder mehreren Werkzeugen (W1) bearbeitet werden, welche um eine zur Teilungsebene parallele Achse rotieren und um eine senkrecht zur Teilungsebene verlaufende Achse schwenkbar und über diese Achse antreibbar sind.

3. Verfahren zur Herstellung eines Gehäuses für eine zweiwellige Drehkolbenmaschine mit miteinander kämmenden Rotoren (1) zur Verdichtung und Expansion von gasförmigen Medien, wobei die Rotoren (1) in einem Förderraum (2) eines Gehäuses über Lager (3) drehbar angeordnet sind, welcher von einem Zylindermantel sowie beidseitig angrenzenden Zylinderseitenteilen gebildet ist, wobei der Zylindermantel mit seinen beiden angrenzenden Zylinderseitenteilen in der Ebene der Rotorenachsen in zwei Hälften geteilt ist und die Zylinderseitenteile Aufnahmebohrungen (12) für die Lager (3) der Rotoren (1) aufweisen,
dadurch **gekennzeichnet,**
- daß die beiden jeweils einstückig ausgebildeten Gehäusehälften (OH, UH) getrennt voneinander auf Vorrichtungsteile (VL, VR) einer Vorrichtung (V) aufgespannt werden,
- und daß die Innenflächen des Zylindermantels, der beiden einstückig mit diesem verbundenen Zylinderseitenteile und der Aufnahmebohrungen (12) für die Lager (3) vorbearbeitet und im Anschluß daran durch Funkenerosion über Funkenerosionsmatrizen fertigbearbeitet werden, die aus Negativabformungen der Gehäusehälften hergestellt sind.

4. Verfahren nach Anspruch 1, dadurch gekennzeichnet, daß die Gehäusehälften (OH, UH) mit Aufnahmeeinrichtungen zum verfahrbaren Aufspannen ausgestattet sind.

5. Zweiwellige Drehkolbenmaschine mit miteinander kämmenden Rotoren zur Verdichtung und Expansion von gasförmigen Medien, wobei die Rotoren in einem Förderraum eines nach einem der Verfahren gemäß den Ansprüchen 1 bis 4 hergestellten Gehäuses über Lager drehbar angeordnet sind,
dadurch **gekennzeichnet,** daß jede Hälfte (4) des Zylindermantels mit seinen beiden angrenzenden Zylinderseitenteilhälften (5) einstückig als Gehäusehälfte (OH, UH) ausgebildet und mit gemeinsamen Paßmitteln (P) zur paßgenauen Ausrichtung gegenüber der anderen Gehäusehälfte ausgestattet ist.

6. Zweiwellige Drehkolbenmaschine nach Anspruch 5 mit auf den Achsen der Rotoren (1) angeordneten Synchronisierungszahnrädern (9), dadurch gekennzeichnet, daß in einem der einstückig mit dem Zylindermantel verbundenen Zylinderseitenteile zwischen dem Förderraum (2) und den Aufnahmebohrungen (12) für die Lager (3) Aufnahmetaschen (11) für die Synchronisierungszahnräder (9) vorgesehen sind.

7. Zweiwellige Drehkolbenmaschine nach Anspruch 5 oder 6, mit auf den Zylinderseitenteilen aufgesetzten Abschlußdeckeln, dadurch gekennzeichnet, daß die Abschlußdeckel einstückig mit den Zylinderseitenteilen verbunden sind.

8. Zweiwellige Drehkolbenmaschine nach Anspruch 5 oder 6, dadurch gekennzeichnet, daß jeder Rotor (1) mit dem jeweils zugeordneten Synchronisierungszahnrad (9) einstückig ausgebildet ist.

9. Zweiwellige Drehkolbenmaschine nach Anspruch 5 oder 6, mit einer Dichtungsanordnung zwischen dem Förderraum (2) und den Synchronisierungszahnrädern (9) bzw. den Lagern (3), dadurch gekennzeichnet, daß die rotorseitigen Teile (8) der Dichtungsanordnung einstückig mit dem Rotor (1) und die gehäuseseitigen Teile (10) der Dichtungsanordnung einstückig mit den Gehäusehälften (OH, UH) ausgebildet sind.

10. Zweiwellige Drehkolbenmaschine nach Anspruch 5, 6, 8 und 9, dadurch gekennzeichnet, daß das Synchronisierungsrad (9) jedes Rotors (1) jeweils zwischen den rotorseitigen Teilen (8) der Dichtungsanordnung und dem Wellensitz für das benachbarte Lager (3) angeordnet ist.

## Claims

1. Method of producing a housing for a twin-shaft rotary piston engine with rotors (1) meshing with each other for the compression and expansion of gaseous media, wherein the rotors (1) are arranged rotatably via bearings (3) in a delivery chamber (2) of a housing, which is formed by a cylinder wall as well as cylinder side portions adjoining on both sides, wherein the cylinder wall with its two adjoining cylinder side portions is divided in the plane of the rotor axes into two halves and the cylinder side portions comprise receiving bores (12) for the bearings (3) of the rotors (1), characterised
- in that the two housing halves (OH, UH) which are each constructed in one piece are finished, joined and provided with fitting means (P) in the region of the plane of division,
- in that the housing halves (OH, UH) are each independently mounted on apparatus portions (VL, VR) of an apparatus (V) and, by means of the latter, can be moved apart perpendicularly to the plane of division to form a gap for insertion and traversing of the machining tool(s) (W1) for machining,
- and in that at least finishing with the inserted machining tool takes place with the housing halves (OH, UH) clamped together.

2. Method of producing a housing for a twin-shaft rotary piston engine with rotors (1) meshing with each other for the compression and expansion of gaseous media, wherein the rotors (1) are arranged rotatably via bearings (3) in a delivery chamber (2) of a housing, which is formed by a cylinder wall as well as cylinder side portions adjoining on both sides, wherein the cylinder wall with its two adjoining cylinder side portions is divided in the plane of the rotor axes into two halves and the cylinder side portions comprise receiving bores (12) for the bearings (3) of the rotors (1), characterised
- in that the two housing halves (OH, UH) which are each constructed in one piece are mounted on apparatus portions (VL, VR) of an apparatus (V) separately from each other,
- and in that the inner surfaces of the cylinder wall, of the two cylinder side portions integrally connected thereto and of the receiving bores (12) for the bearings (3) are machined with one or more tools (W1) which rotate about an axis parallel to the plane of division and can be pivoted about an axis extending perpendicularly to the plane of division and driven via this axis.

3. Method of producing a housing for a twin-shaft rotary piston engine with rotors (1) meshing with each other for the compression and expansion of gaseous media, wherein the rotors (1) are arranged rotatably via bearings (3) in a delivery chamber (2) of a housing, which is formed by a cylinder wall as well as cylinder side portions adjoining on both sides, wherein the cylinder wall with its two adjoining cylinder side portions is divided in the plane of the rotor axes into two halves and the cylinder side portions comprise receiving bores (12) for the bearings (3) of the rotors (1), characterised
- in that the two housing halves (OH, UH) which are each constructed in one piece are mounted on apparatus portions (VL, VR) of an apparatus (V) separately from each other,
- and in that the inner surfaces of the cylinder wall, of the two cylinder side portions integrally connected thereto and of the receiving bores (12) for the bearings (3) are premachined and subsequently finished by spark erosion through spark erosion matrices which are made from negative casts of the housing halves.

4. Method according to claim 1, characterised in that the housing halves (OH, UH) are provided with receiving devices for mobile mounting.

5. Twin-shaft rotary piston engine with rotors meshing with each other for the compression and expansion of gaseous media, wherein the rotors are arranged rotatably via bearings in a delivery chamber of a housing produced by one of the methods according to claims 1 to 4, characterised in that each half (4) of the cylinder wall is constructed in one piece with its two adjoining cylinder side portion halves (5) as a housing half (OH, UH) and provided with common fitting means (P) for precise-fitting alignment relative to the other housing half.

6. Twin-shaft rotary piston engine according to claim 5 with synchronising gears (9) arranged on the axes of the rotors (1), characterised in that in one of the cylinder side portions connected integrally to the cylinder wall, between the delivery chamber (2) and the receiving bores (12) for the bearings (3), are provided receiving recesses (11) for the synchronising gears (9).

7. Twin-shaft rotary piston engine according to claim 5 or 6, with end covers placed on the cylinder side portions, characterised in that the end covers are integrally connected to the cylinder side portions.

8. Twin-shaft rotary piston engine according to claim 5 or 6, characterised in that each rotor (1) is constructed in one piece with the respectively associated synchronising gear (9).

9. Twin-shaft rotary piston engine according to claim 5 or 6, with a sealing assembly between the delivery chamber (2) and the synchronising gears (9) or the bearings (3), characterised in that the portions (8) of the sealing assembly on the rotor side are constructed in one piece with the rotor (1), and the portions (10) of the sealing assembly on the housing side are constructed in one piece with the housing halves (OH, UH).

10. Twin-shaft rotary piston engine according to claims 5, 6, 8 and 9, characterised in that the synchronising gear (9) of each rotor (1) is arranged in each case between the portions (8) of the sealing assembly on the rotor side and the shaft seat for the adjacent bearing (3).

## Revendications

1. Procédé de fabrication d'un carter pour une machine à pistons rotatifs à deux arbres, avec des rotors (1) s'engrenant l'un dans l'autre pour effectuer la compression et la détente de milieux se présentant sous forme de gaz, les rotors (1) étant disposés tournants, par l'intermédiaire de paliers (3), dans un compartiment de transfert (2) d'un carter, compartiment qui est formé d'une enveloppe cylindrique, ainsi que de parties latérales de cylindre limitrophes, placées de part et d'autre, l'enveloppe cylindrique avec ses deux parties latérales de cylindre limitrophes étant divisée en deux moitiés, suivant le plan des axes des rotors, et les parties latérales de cylindre présentant des perçages de logement (12) pour les paliers (3) des rotors (1),
caractérisé
- en ce que les deux moitiés de carter (OH, UH), chacune réalisées d'un seul tenant, sont soumises à un usinage de finition dans la zone du plan de séparation, assemblées et pourvues de moyens d'ajustage (P),
- en ce que les moitiés de carter (OH, UH) sont montées par serrage, chacune pour soi, sur des parties (VL, VR) d'un dispositif (V) et sont susceptibles d'être écartées à l'aide de ceux-ci pour l'usinage, perpendiculairement par rapport au plan de séparation, pour former un espace intermédiaire destiné à l'insertion et au déplacement du ou des outil(s) (W1) destiné(s) à l'usinage,
- et en ce que, au moins, l'usinage final a lieu avec un outil d'usinage inséré lorsque les moitiés de carter (OH, UH) sont bridées ensemble.

2. Procédé de fabrication d'un carter pour une machine à pistons rotatifs à deux arbres avec des rotors (1) s'engrenant l'un dans l'autre pour effectuer la compression et la détente de milieux se présentant sous forme de gaz, les rotors (1) étant disposés tournants, par l'intermédiaire de paliers (3), dans un compartiment de transfert (2) d'un carter, compartiment qui est formé d'une enveloppe cylindrique, ainsi que de parties latérales de cylindre limitrophes de part et d'autre, l'enveloppe cylindrique avec ses deux parties latérales de cylindre limitrophes étant divisée en deux moitiés, suivant le plan des axes des rotors, et les parties latérales de cylindre présentant des perçages de logement (12) pour les paliers (3) des rotors (1),
caractérisé
- en ce que les deux moitiés de carter (OH, UH), chacune réalisée d'un seul tenant, sont montées par serrage, séparées l'une de l'autre, sur des parties (VL, VR) d'un dispositif (V),
- et en ce que les faces intérieures de l'enveloppe cylindrique, des deux parties latérales de cylindre et des perçages de logement (12) pour les paliers (3), reliées d'un seul tenant avec l'enveloppe cylindrique, sont usinées avec un ou plusieurs outils (W1), qui tournent autour d'un axe parallèle au plan de séparation et peuvent être entraînés, en pouvant pivoter autour d'un axe s'étendant perpendiculairement par rapport au plan de séparation et par l'intermédiaire de cet axe.

3. Procédé de fabrication d'un carter pour une machine à pistons rotatifs à deux arbres avec des rotors (1) s'engrenant l'un dans l'autre pour effectuer la compression et la détente de milieux se présentant sous forme de gaz, les rotors (1) étant disposés, tournants, sur des paliers (3), dans un compartiment de transfert (2) d'un carter, compartiment qui est formé d'une enveloppe cylindrique, ainsi que de parties latérales de cylindre limitrophes, de part et d'autre, l'enveloppe cylindrique avec ses deux parties latérales de cylindre limitrophes étant divisée en deux moitiés, suivant le plan des axes des rotors, et les parties latérales de cylindre présentant des perçages de logement (12) pour les paliers (3) des rotors (1),
caractérisé
- en ce que les deux moitiés de carter (OH, UH), chacune réalisées d'un seul tenant, sont montées par serrage, séparées l'une de l'autre sur des parties (VL, VR) d'un dispositif (V),
- et en ce que les faces intérieures de l'enveloppe cylindrique, des deux parties latérales de cylindre et des perçages de logement (12) pour les paliers (3), reliées d'un seul tenant à l'enveloppe, sont préusinées, puis elles sont soumises à un usinage de finition par étincelage sur des matrices d'étincelage qui sont fabriquées à partir de négatifs de moulage des moitiés du carter.

4. Procédé selon la revendication 1, caractérisé en ce que les moitiés de carter (OH, UH) sont équipées de dispositifs de réception permettant le montage par serrage avec possibilité de déplacement.

5. Machine à pistons rotatifs à deux arbres, avec des rotors s'engrenant l'un dans l'autre pour effectuer la compression et la détente ds milieux se présentant sous forme de gaz, les rotors étant disposés tournants, sur des paliers, dans un compartiment de transfert d'un carter fabriqué d'après l'un des procédés indiqué dans les revendications 1 à 4,
caractérisée en ce que chaque moitié (4) de l'enveloppe cylindrique est réalisée d'un seul tenant avec ses deux moitiés partielles des côtés du cylindre (5) limitrophes, sous forme de moitié de carter (OH, UH), et est équipée de moyens d'ajustage commun (P), pour être positionnées avec un ajustage précis par rapport à l'autre moitié de carter.

6. Machine à pistons rotatifs à deux arbres, selon la revendication 5, avec des roues dentées de synchronisation (9) montées sur les axes des rotors, caractérisée en ce que des poches de logement pour les roues dentées de synchronisation (9) sont prévues dans l'une des parties latérales du cylindre, reliée d'un seul tenant à l'enveloppe cylindrique, entre le compartiment de transfert (2) et les perçages de logement (12) pour les paliers (3).

7. Machine à pistons rotatifs à deux arbres, selon la revendication 5 ou 6, avec des couvercles de fermeture montés sur les parties latérales de cylindre, caractérisée en ce que les couvercles de fermeture sont reliés d'un seul tenant aux parties latérales de cylindre.

8. Machine à pistons rotatifs à deux arbres selon la revendication 5 ou 6, caractérisée en ce que chaque rotor (1) est réalisé d'un seul tenant avec la roue dentée de synchronisation (9) respectivement associée.

9. Machine à pistons rotatifs à deux arbres selon la revendication 5 ou 6, avec un dispositif d'étanchéité situé entre le compartiment de transfert (2) et les roues dentées de synchronisation (9), ou les paliers (3), caractérisée en ce que les parties (8) se trouvant côté rotor du dispositif d'étanchéité sont réalisées d'un seul tenant avec le rotor (1) et les parties (10) se trouvant côté carter du dispositif d'étanchéité sont réalisées d'un seul tenant avec les moitiés du carter (OH, UH).

10. Machine à pistons rotatifs à deux arbres selon la revendication 5, 6, 8 et 9, caractérisée en ce que la roue de synchronisation (9) de chaque rotor (1) est disposée respectivement entre les parties (8) se trouvant côté rotor du dispositif d'étanchéité et le siège d'arbre prévu pour le palier (3) voisin.
